# EUROPEAN PATENT APPLICATION

(11) **EP 4 439 421 A1**
(43) Date of publication of application: **02.10.2024**
(21) Application number: 23166063.0
(22) Date of filing: 31.03.2023
(51) Int. Cl.: G06Q 10/0637

(54) **A METHOD FOR GENERATING A USER EXPERIENCE MATURITY OF AN ORGANIZATION BY AN EVALUATION SYSTEM, A COMPUTER PROGRAM PRODUCT, A COMPUTER-READABLE STORAGE MEDIUM, AN ELECTRONIC COMPUTING DEVICE AND AN EVALUATION SYSTEM**

(71) Applicant: Siemens Aktiengesellschaft, 80333 München (DE)
(72) Inventor: Zeiner, Katharina, 70569 Stuttgart (DE); Singh, Saurabh Narayan, 81739 München (DE)
(74) Representative: Siemens Patent Attorneys

(57) **Abstract**

The method relates to a method for generating a user experience maturity (12) of an organization (14) by an evaluation system (10), comprising the steps of receiving data (26) from at least one visual project management solution tool (28, 30, 32) by an integration service module (18) of an electronic computing device (16) of the evaluation system (10); aggregating the received data by a data aggregation module (20) of the electronic computing device (16); evaluating the aggregated data by a learning algorithm (22) of the electronic computing device (16); and generating the user experience maturity (12) depending on the evaluated data by a user advisory algorithm (24) of the electronic computing device (16). Furthermore, the invention relates to a computer program product, a computer-readable storage medium, an electronic computing device (16), and to an evaluation system (10).

## Description

Independent of the grammatical term usage, individuals with male, female or other gender identities are included within the term.

The invention relates to a method for generating a user experience maturity of an organization by an evaluation system. Furthermore, the invention relates to a computer program product, a computer-readable storage medium, an electronic computing device, as well as to an evaluation system.

A good user experience (UX) is very important for the usage of an adaptability of software and products. Organizations with software as part of their business model cannot ignore user experience when it comes to measuring success. Yet, it is very challenging to measure the user experience maturity of an organization and its associated software development model and processes. For most organizations, it is difficult to identify where they may improve their user experience, and what ideas to implement in order to improve.

In most cases, external consultants are hired to observe the behavior of the organization. These consultants try to understand the process, the current state of the software or application and then measure the user experience maturity. The challenge is that this is a manual process, which is done after the problem or challenge has already been encountered by the organization and the overall process can be time consuming and is dependent on the skill of the accessor. Furthermore, this poses a problem for organizations trying to change their processes and practices between assessments to make accurate changes to their practices or have to rely on potential outdated measures.

It is an object of the invention to provide a method, a computer program product, a computer-readable storage medium, an electronic computing device as well as an evaluation system, which overcomes the problems in the state of the art. In particular, it is an object of the invention to provide a method, a computer program product, a computer-readable storage medium, an electronic computing device, as well as an evaluation system, by which an automated generating of a user experience maturity of an organization is realized.

This object is solved by a method, a computer program product, a computer-readable storage medium, an electronic computing device, as well as an evaluation system according to the independent claims. Advantageous forms of embodiments are presented in the dependent claims.

One aspect of the invention relates to a method for generating a user experience maturity of an organization by an evaluation system. Data from at least one visual project management solution tool is received by an integration service module of an electronic computing device of the evaluation system. The received data is aggregated by a data aggregation module of the electronic computing device. The aggregated data is evaluated by a learning algorithm of the electronic computing device. The user experience maturity is generated depending on the evaluated data by a user advisory algorithm of the electronic computing device.

Therefore, a tool and a methodology are proposed which can continuously provide feedback to organizations during their software development process regarding the user experience maturity. The method/evaluation system can also be configured to support individual organizational profiles.

According to the invention, one aspect is to integrate the agile process and a visual project management solution tool of the architecture and development related activities and processes of the organization to create the source of data based on which the user experience maturity assessment can be created. The data will be fed to the learning algorithm, in particular to an artificial intelligence, based on an engine for the user experience which could calculate the maturity of the user experience. This engine may evolve based on the duration for which it is integrated into the organization and may bring the knowledge learned from the organization to the knowledge base.

In particular, the evaluation system comprises the integration service module. This a microservice which has an interface for various, for example, Kanban tools. The integration service module may also be extended to support other tools as well. The integration service reads the user stories and associated tags from the agile process. Furthermore, the evaluation system uses a data aggregation module. This data aggregation module combines all the data coming from various resources via the integration service module for one organization at one place so that the data can be used for learning and assessment generation. The learning algorithm has some defined parameters. These parameters are fed to the data coming from the data aggregation module and can be tuned based on the organization profile and behavior. The learning algorithm evolves as more data it is fed to. The user advisory algorithm returns the user experience maturity of the organization as well as various suggestions, for example, to improve the same. The user advisory algorithm is a real time engine which starts returning suggestions soon after the overall tool is plugged into the development board of the organization.

Therefore, an end to end automated process for user experience maturity analyses and recommendation is provided. In particular, in a manual method of a recommendation, the knowledge is limited to the number of projects, whereas in the evaluation system, the more projects it participates, the better the recommendations get. Projects and organizations get a constant recommendation for improving the user experience. The evaluation system provides instant feedback if an organization changes their process. If more organizations within a larger company participate, all the data may be used to improve the recommendations and maturity for the overall organization. The recommendations are up to date with where the organization is in the user experience journey, at a given point in time.

In another implementation of the solution, the data may also be provided manually by product managers, architects, designers, and software developers of the organization to the evaluation system, in particular to the integration service module. This may be useful for the organizations which do not use digital, for example Kanban, tools to check their application development and product life cycle process.

According to an embodiment, the visual project management solution tool is provided as a Kanban tool. Kanban may be a scheduling system for learning manufacturing in order to improve manufacturing efficiency. Kanban is an effective tool to support running a production system as a whole and an excellent way to promote improvement. Problem areas are highlighted by a measuring lead time and cycle time of the full process and process steps. In particular, the Kanban tool may be a digital Kanban tool.

In another embodiment, an organization behavior and/or an organization profile is taken into consideration by the learning algorithm. For example, behavior trends may be identified, and best practices to improve the user experience may also be provided. The suggestions and best practices take into consideration various parameters like, but not limited to, user experience maturity organizations, the size of the organization, budget of the project, number of user experience designers in the team, feature burn rate and release cycle of the product and organization. Therefore, a detailed user experience maturity may be determined.

In another embodiment, the aggregated data and/or the generated user experience maturity are compared with further aggregated data and/or further generated user experience maturity from further organizations. In particular, over time, the extracted information may also be compared against the behavior of other organizations to identify patterns and provide preemptive suggestions to the organization for improvement of behaviors as well as insights into ongoing trends.

In another embodiment, the generated user experience maturity is taken into consideration for an in future generated user experience maturity. In particular, the data aggregation module also performs an overall analysis of metadata to provide feedback to, for example, a team in case of changes of behavior or missing tickets or no data. Furthermore, the learning algorithm is continuously evolving as more data is fed to it. Therefore, a learning algorithm can be provided, by which the user experience maturity can be provided in an enhanced manner.

According to another embodiment, the learning algorithm is provided with an initial model for organizations. In particular, the evaluation system takes the data and fits them into parameters comparing it against standard organization maturity for similar user experience behavior and user experience data. Based on the comparison, a maturity report may be created for the organization, wherein user may have an improved overlook of the organization, in particular of the user experience maturity.

In another embodiment for generating the user experience maturity, a user experience awareness and/or the user experience as a goal and/or a user centricity and/or a design system and/or an iterative design and/or user experience requirements and/or user experience roles and/or the relationship between software architecture and user experience and/or a user experience decision making and/or a user experience budget and/or user experience measures are taken into consideration. In particular, the invention assesses different aspects of a good user experience integration that are relevant for organizations in a continuous and automated fashion. This aspect may be the user experience awareness, user experience as a goal, user experience centricity, design systems, iterative design, user experience requirements, user experience roles, the relationship between software architecture and user experience, user experience decision making, user experience budget and user experience measures. These aspects are not limited and can be expanded to include more aspects if required by an organization. For each aspect, an algorithm calculates the user experience maturity based on the measures taken. Based on the measured user experience maturity for a given aspect, recommendations are made on how to improve it.

In another embodiment, a historic development of the user experience maturity is determined. Therefore, depending on the data, behavior trends may be identified and best practices to improve the user experience are also provided.

In another embodiment, an improvement proposal for improving the user experience maturity is determined. For example, this may include increasing the user experience awareness through target trainings, increasing user centricity through earlier user involvement, for example, if a low stage of user experience maturity is determined, or through co-creation activities, but the tool may also be configured for more recommendations.

In another embodiment, at least one user story of at least one user is taken into consideration for generating the user experience maturity. A user story may be a short, specific and goal-orientated story. It is a one short statement that tends to have, for example, the following structure: "As a, I want so". User stories are collaborative design tools. All, projects are expected to participate in a definition and sorting of user stories. User stories focus the project on the perspective of those who will use it. Therefore, a detailed user experience maturity can be determined.

In another embodiment, user test data are taken into consideration for generating the user experience maturity. The user acceptance test data may also be fed to the evaluation system. This data is used to further customize the parameters of learning algorithms as well as the evaluation system to create improved suggestions. This may complete the loop where the tracking of user experience is done from product management and developers to the end users.

In particular, the method a computer-implemented method. Therefore, another aspect of the invention relates to a computer program product comprising program code means for performing a method according to the preceding aspect.

A still further aspect of the invention relates to a computer-readable storage medium comprising at least the computer program product according to the preceding aspect.

Furthermore, the invention relates to an electronic computing device comprising at least the computer-readable storage medium according to the preceding aspect, comprising at least one integration service module, one data aggregation module, one learning algorithm, and one user advisory algorithm.

Furthermore, the electronic computing device comprises at least processors, circuits, in particular integrated circuits, and further electronic means for performing steps of the method.

A still further aspect of the invention relates to an evaluation system for generating a user experience maturity of an organization, comprising at least the electronic computing device according to the preceding aspect, wherein the evaluation system is configured for performing a method according to the preceding aspect. In particular, the method is performed by the evaluation system.

Advantageous forms of configuration of the method are to be regarded as advantageous forms of the computer program product, the computer-readable storage medium, the electronic computing device as well as the evaluation system. The electronic computing device as well as the evaluation system comprises means for performing the method according to the preceding aspect.

Independent of the grammatical term usage, individuals with male, female or other gender identities are included within the term.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.

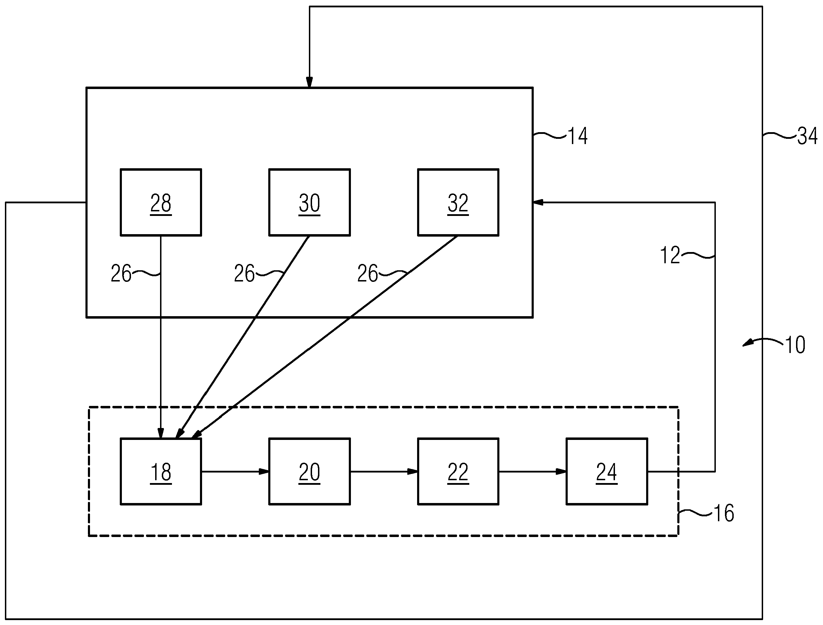

Therefore, the only Fig. 1 shows a schematic block diagram according to an embodiment of an evaluation system comprising an embodiment of the electronic computing device.

Fig. 1 shows a schematic block diagram according to an embodiment of an evaluation system 10. The evaluation system 10 is configured for generating a user experience maturity 12 of an organization 14. Therefore, the evaluation system 10 comprises at least one electronic computing device 16. The electronic computing device 16 may comprise at least a computer-readable storage medium as well as at least one integration service module 18, one data aggregation module 20 and one learning algorithm 22. Furthermore, the electronic computing device 16 may comprise at least one user advisory algorithm 24.

According to an embodiment for generating the user experience maturity 12 receiving data 26 from at least one visual project management solution tool 28, 30, 32 is performed. As shown in Fig. 1, there may be a plurality of visual project management solution tools 28, 30, 32. For example, a first visual project management solution tool 28 and/or a second visual project management solution tool 30 and/or a third visual project management solution tool 32. The visual project management solution tools 28, 30, 32 may be, for example, a Kanban tool. Also other visual project management solution tools 28, 30, 32 are possible, and the different visual project management solution tools 28, 30, 32 may be different. Furthermore, a feedback 34 loop is shown.

The received data 26 is aggregated by the data aggregation module 18. The aggregated data is evaluated by the learning algorithm 20. The user experience maturity 12 is generated depending on the evaluated data by the user advisory algorithm 24.

According to Fig. 1, an integration of the agile process and the, for example, Kanban boards of the architecture and development related activities and processes of the organization 14 to create the source of data based on which the user experience maturity assessment can be created. The data will be fed to the artificial intelligence based aggregation and assessment engine for the evaluation system 10 which may calculate the maturity of the user experience. The evaluation system 10 evolves based on the duration for which it is integrated into the organization 14 and brings the knowledge learned from other organizations to the knowledge base.

The invention assesses different aspects of a good user experience integration that are relevant for organizations 14 in a continuous and automated fashion. For example, eleven aspects may be used, but it may also be expanded to include more aspects if required by the organization 14. These aspects are, for example, the user experience awareness, user experience as a goal, user experience centricity, design systems, iterative design, user experience requirements, user experience roles, the relationship between software architecture and user experience, user experience decision making, user experience budget and user experience measures.

For each aspect, an algorithm calculates the user experience maturity 12 based on the measures taken. Based on the measured user experience maturity 12 for a given aspect, recommendations are made on how to improve it.

This includes increasing the user experience awareness through target trainings, increasing user centricity through earlier user involvement or through co-creation activities, but the tool may also be configured for more recommendations.

In particular, three steps are provided. A first step is collecting the data 26 for analyses and recommendation. The organization 14 provides identifiable tags/labels to the user stories and milestones classifying them based on the user experience, backend, user interface and furthermore. The integration system module 18 is provided with an access to the Kanban tools of choice. The integration system module 18 reads the user stories to analyze which user stories are related to user experience and how much time is spent on them. Based on the analysis, metadata is created which contains various or overall information like relation to user experience, average time spent, average number of developers, percentage compared to user issues and so on. The configurations and fields for metadata are not fixed, and as the learning algorithm 22 improves, more fields can be added to metadata to classify the information better. The collected data is sent to the data aggregation module 20.

A second step is performed, wherein aggregating the data 26 and learning from it is performed. The collected metadata is continuously classified based on parameters. Various information is extracted from the data 26, including, but not limited to percentage of total time spent on user experience, which feature development tickets have a prior user experience ticket associated, are backend development tickets related to a user experience ticket, are only user interface issues associated with or depend on user experience issue. All this information is analyzed, for example, by using answers like yes, no, how many. The data aggregation service also performs an overall analysis of metadata to provide feedback on the team in case of change of behavior or missing tickets or no data 26. Over time, the extracted information is also compared against behavior of the other organizations to identify patterns and provide preemptive suggestions to the organization 14 for improvement of behaviors as well as insights into ongoing trends.

In a third step, the evaluation system 10 observes the data 26 and the trends and based on that provides current state of user experience maturity 12 for the organization 14. The evaluation system 10 takes in the data 26 and fits them into parameters comparing it against standard organization maturity for similar user experience behavior and user experience data. Based on the comparison, a maturity report is created for the organization 14. Additionally, depending on the data, behavior trends are identified and best practices to improve the user experience are also provided.

The suggestions and best practices take into consideration various parameters like, but not limited to, user experience maturity 12 of organizations, the size of the organization 14, budget of the project, number of user experience designers in the team, feature burn rate and release cycle of the product and organization.

In another implementation of the solution, a user acceptance test data may also be fed to the evaluation system 10. This data is used to further customize the parameters of learning algorithms as well as the user advisory algorithm 24 to create improved suggestions. This will complete the loop where the tracking of the user experience is done from the product management and developers to the end users.

In another implementation of the solution, data may also be provided manually by the product managers, architects, designers, and software developers of the organization. This may be useful for the organizations which do not use digital Kanban tools to check their application development and product lifecycle process.

## Claims

1. A method for generating a user experience maturity (12) of an organization (14) by an evaluation system (10), comprising the steps of:
- receiving data (26) from at least one visual project management solution tool (28, 30, 32) by an integration service module (18) of an electronic computing device (16) of the evaluation system (10);
- aggregating the received data by a data aggregation module (20) of the electronic computing device (16);
- evaluating the aggregated data by a learning algorithm (22) of the electronic computing device (16); and
- generating the user experience maturity (12) depending on the evaluated data by a user advisory algorithm (24) of the electronic computing device (16).

2. A method according to claim 1, wherein the visual project management solution tool (28, 30, 32) is provided as a Kanban tool.

3. A method according to claim 1 or 2, wherein an organization behavior and/or an organization profile is taken into consideration by the learning algorithm (22).

4. A method according to any of claims 1 to 3, wherein the aggregated data and/or the generated user experience maturity (12) are compared with further aggregated data and/or further generated user experience maturity from further organizations.

5. A method according to any of claims 1 to 4, wherein the generated user experience maturity (12) is taken into consideration for an in future generated user experience maturity (12).

6. A method according to any of claims 1 to 5, wherein the learning algorithm (22) is provided with an initial model for organizations.

7. A method according to any of claims 1 to 6, wherein for generating the user experience maturity (12) a user experience awareness and/or the user experience as a goal and/or a user centricity and/or a design system and/or an iterative design and/or user experience requirements and/or user experience roles and/or the relationship between software architecture and user experience and/or a user experience decision making and/or a user experience budget and/or user experience measures are taken into consideration.

8. A method according to any of claims 1 to 7, wherein a historic development of the user experience maturity (12) is determined.

9. A method according to any of claims 1 to 8, wherein an improvement proposal for improving the user experience maturity (12) is determined.

10. A method according to any of claims 1 to 9, wherein at least one user story of at least one user is taken into consideration for generating the user experience maturity (12) .

11. A method according to any of claims 1 to 10, wherein user test data is taken into consideration for generating the user experience maturity (12).

12. A computer program product comprising program code means for performing a method according to any of claims 1 to 11.

13. A computer-readable storage medium comprising at least the computer program product according to claim 12.

14. An electronic computing device (16) comprising at least the computer-readable storage medium according to claim 13, and at least one integration service module (18), one data aggregation module (20), one learning algorithm (22), and one user advisory algorithm (24).

15. An evaluation system (10) for generating a user experience maturity (12) of an organization (14), comprising at least the electronic computing device (16) according to claim 14, wherein the evaluation system (10) is configured for performing a method according to any of claims 1 to 11.
